# EUROPEAN PATENT SPECIFICATION

(11) **EP 0 386 914 B1**
(45) Date of publication and mention of the grant of the patent: **25.05.1994**
(21) Application number: 90302015.4
(22) Date of filing: 26.02.1990
(51) Int. Cl.: G11B 19/12

(54) **Disc player**
Plattenspieler
Tourne-disque

(30) Priority: 07.03.1989 JP 54199/89
(43) Date of publication of application: 12.09.1990
(73) Proprietor: PIONEER ELECTRONIC CORPORATION, Meguro-ku Tokyo 153 (JP)
(72) Inventor: Otsubo, Hiroshi, c/o Pioneer Electronic Corp., Tokorozawa-shi, Saitama (JP); Kawano, Eisaku, c/o Pioneer Electronic Corp., Tokorozawa-shi, Saitama (JP); Ohmori, Seiji, c/o Pioneer Electronic Corp., Tokorozawa-shi, Saitama (JP); Tsuruga, Tasuku, c/o Pioneer Electronic Corp., Tokorozawa-shi, Saitama (JP); Mawatari, Takeshi, c/o Pioneer Electronic Corp., Tokorozawa-shi, Saitama (JP); Shimizu, Tetsuo, c/o Pioneer Electronic Corp., Tokorozawa-shi, Saitama (JP)
(74) Representative: Brunner, Michael John

(56) References cited:
- EP-A- 0 294 242
- PATENT ABSTRACTS OF JAPAN, unexamined applications, P field, vol. 10, no. 308,October 21, 1986 THE PATENT OFFICE JAPANESE GOVERNMENT page 26 P 508
- PATENT ABSTRACTS OF JAPAN, unexamined applications, P field, vol. 12, no. 345,September 16, 1988 THE PATENT OFFICE JAPANESE GOVERNMENT page 153 P 759

## Description

### FIELD OF THE INVENTION

The present invention relates to a disc player capable of playing a so-called Laser vision Disc with Digital sound (LDD) disc, in which analog audio signals formed of a plurality of channels and digital stereo audio signals, exist in different frequency ranges and are recorded in a predetermined format.

### BACKGROUND OF THE INVENTION

An LDD disc is a video disc in which an audio signal is digitized through a predetermined digital modulation approach into a train of pulse signals and is converted into an FM modulated signal for recording together with an FM modulated video signal and an FM modulated analog audio signal.

With the LDD disc, the audio signal is split into two channels where audio carriers of 2.3 MHz and 2.8 MHz, respectively, are frequency modulated by the two-channel audio signals. The video signal is frequency modulated so that a sync tip is at 7.6 MHz, a pedestal level is at 8.1 MHz, and a white peak is at 9.3 MHz, respectively. The audio signal is digitized through, for example, PCM into a train of pulse signals. The pulse train signal is suitable for recording through the Eight-to-Fourteen Modulation (EFM) technique and has frequency components of a train of pulses having widths of 3T-11T, where T represents a bit period of the PCM signal. A pulse of 3T is about 720 KHz and 11T is about 200 KHz, which is the maximum. The pulse train signal is superimposed at a level of less than about 1/10 of that of the main video carrier, and is slice-amplified at levels in the vicinity of zero-crossing points to be converted into a pulse modulated signal for recording.

Fig. 6 shows the frequency spectrum of an RF signal reproduced from the LDD disc of the above-described recording method. Range A represents the spectrum of a digital stereo audio signal, B shows the spectrum of an audio FM signal of the left and right channels, and C shows the spectrum of a video FM signal. JP-A-61-120374 discloses a disc player having the features of the precharacterising portion of claim 1.

With such LDD discs, particularly so-called KARAOKE (i.e., sing-along) discs, one of the analog audio signals recorded in the two channels contains a monaural accompaniment while the other channel includes the vocal part in addition to the monaural accompaniment. On the other hand, the digital stereo audio signal contains only the stereo accompaniment. Therefore, when one wishes to listen to the vocal part, the conventional disc player suffers from a problem that there is not much feeling of listening to a live orchestra due to the fact that the accompaniment is reproduced in only the monaural mode since the analog audio signal reproduced from the disc is outputted.

### SUMMARY OF THE INVENTION

An object of the present invention is to provide a disc player in which the accompaniment can be reproduced in the stereo mode when one wishes to listen to the vocal part of the LDD disc.

A disc player according to the present invention is one capable of playing back an LDD disc in which digital stereo audio signals and analog audio signals (which are associated with the digital audio signals and formed of a plurality of channels) are recorded in different frequency bands in a predetermined format.

The disc player comprises: a pickup for reading signals recorded in the disc loaded at a playback position; first reproduction means for reproducing the digital stereo audio signals from the signal that is read by means of the pickup; second reproduction means for reproducing the analog audio signals from the signal that is read by means of the pickup; identifying means for identifying whether or not the disc which is loaded at the playback position is an LDD disc; and mixing means for mixing and outputting, when the disc loaded at the playback is identified as being an LDD disc, the stereo audio signals reproduced by the first reproduction means with any one of the audio signals reproduced by the second reproduction means.

### BRIEF DESCRIPTION OF THE DRAWINGS

Fig. 1 is a block diagram showing an embodiment of the present invention;
Figs. 2-3 are flowcharts illustrating the operation of the system controller in the disc player of Fig. 1;
Figs. 4-5 are diagrams showing, in part, other embodiments of the invention; and
Fig. 6 is a diagram for showing the frequency spectrum of the respective signals recorded in an LDD disc.

### DETAILED DESCRIPTION OF THE PREFERRED EMBODIMENTS

An embodiment of the present invention will now be described in detail with reference to the drawings.

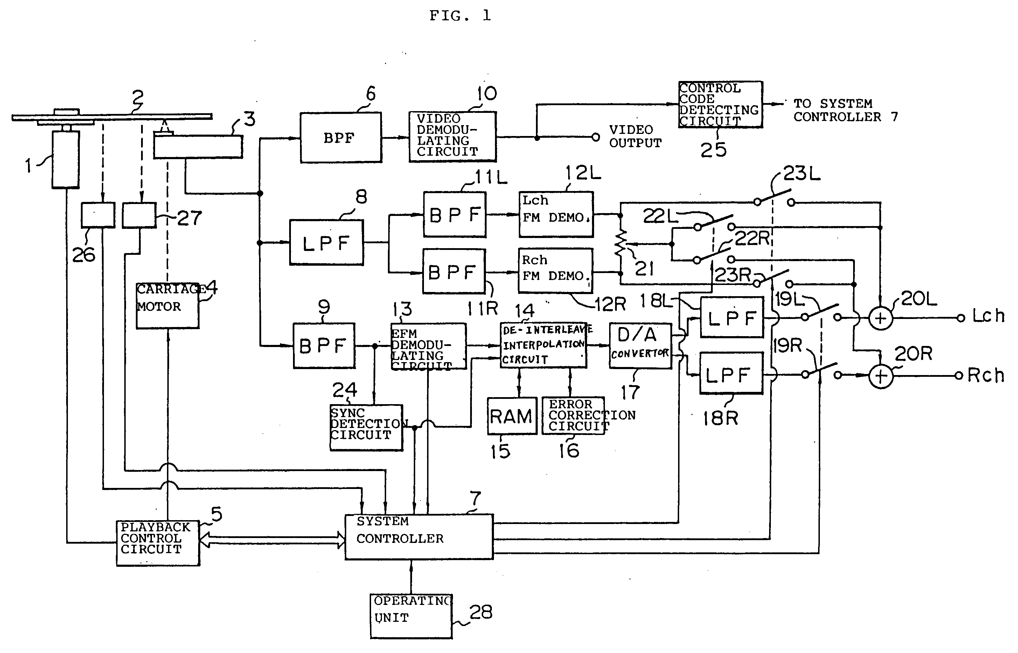

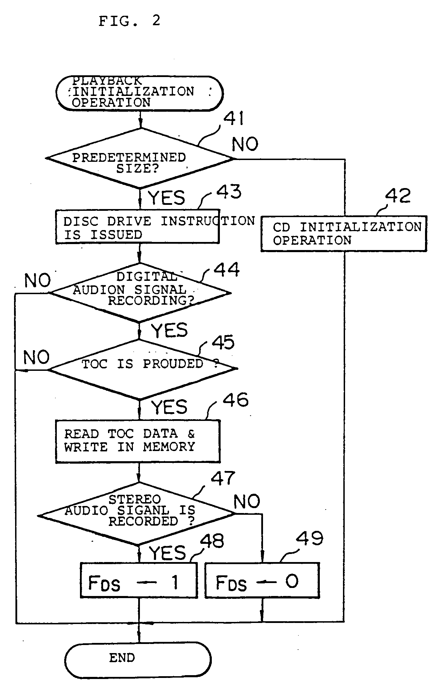

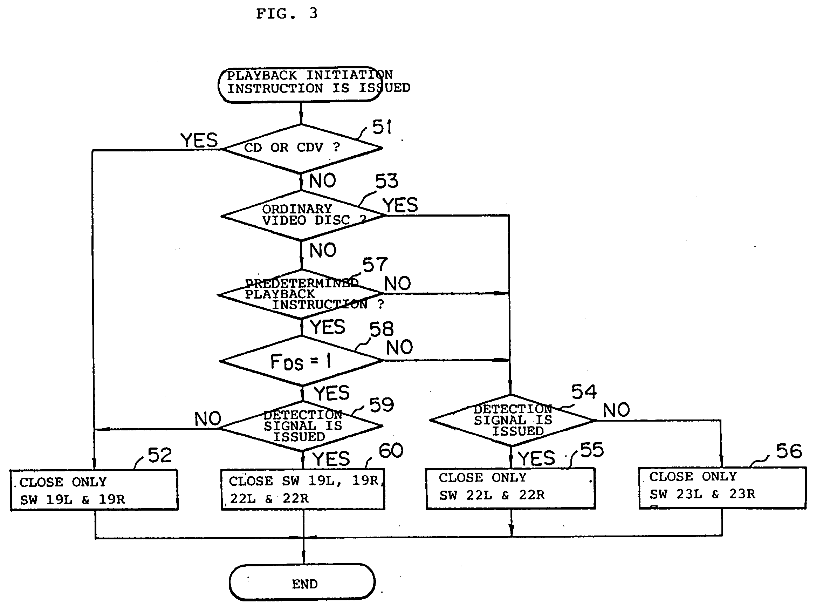

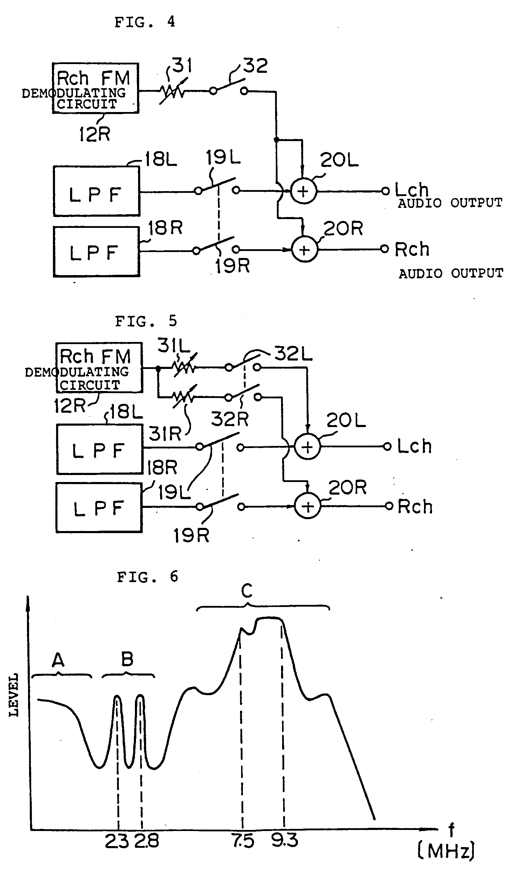

Fig. 1 is a block diagram for showing an example of an optical disc player according to the present invention. A disc 2 is rotated by a spindle motor 1 and the signal recorded on the disc is read out by means of an optical pickup 3. The pickup 3 is supported by a carriage (not shown) which is driven by a carriage motor 4 to move the pickup radially with respect to the disc 2. An information reading portion of the pickup 3 (i.e., an optical spot for reading the information) is positioned radially with respect to disc 2.

In addition to the above-described mechanism, there are provided a variety of servo systems such as a spindle servo system, a focus servo system, a tracking servo system, and a carriage servo system (not shown). These systems are well known and detailed description thereof is omitted.

The spindle motor 1 and the carriage motor 4 are driven by the spindle servo system, the carriage servo system or a playback unit controlling circuit 5. The playback unit controlling circuit 5 is adapted to drive the spindle motor 1 and the carriage motor 4 in accordance with a command from the system controller 7, primarily to perform the on and off control of the aforementioned various servo systems (not shown).

The RF signal outputted from the pickup 3 is supplied to a bandpass filter (BPF) 6 for the video FM, a lowpass filter (LPF) 8 for the analog audio FM and a bandpass filter 9 for the digital audio EFM signal.

The video FM signal passed through the BPF 6 for the video FM is supplied to a video demodulating circuit 10 for demodulating the FM signal to reproduce the video signal.

The output of the LPF 8 is separated into the analog audio FM signals of the left and right channels by BPFs 11L and 11R that pass through only audio carrier components at frequencies of 2.3 MHz and 2.8 MHz, respectively, subsequently to be demodulated into the audio signals of the left and right channels by FM demodulating circuits 12L and 12R. LPF 8, BPFs 11L and 11R, and the FM demodulating circuits 12L and 12R form a first reproducing means.

The digital audio EFM signal, which is separated from the reproduced RF signal by the digital audio EFM signal BPF 9, is supplied to an EFM demodulating circuit 13 and a sync signal detecting circuit 24. The EFM demodulating circuit 13 performs a EFM demodulation process to obtain pulse signals by slicing the RF signal, thereby to form digital data and a subcode including the audio signals of the left and right channels which are the PCM data, i.e., time division multiplexed data. The digital data, including the audio information outputted from the EFM demodulating circuit 13, is supplied to a de-interleave/interpolation circuit 14.

The sync signal detected by a sync signal detecting circuit 24 is supplied to the system controller 7, and as a timing signal to the de-interleave/interpolation circuit 14.

The de-interleave/interpolation circuit 14 is adapted to co-operate with a RAM 15 to put the digital data, which had previously been rearranged in a predetermined order through interleave during recording, back to their original sequence, subsequently to send it to an error correcting circuit 16. Further, the de-interleave/interpolation circuit 14 is adapted to interpolate by, for example, an average value interpolation method, the error data in the output data from the error correcting circuit 16 when a signal indicating that error correction has failed is outputted from the error correcting circuit 16. The error correcting circuit 16 performs the error correction using CIRC (Cross Interleave Reed Solomon Code) to supply the de-interleave/interpolation circuit 14 with serial data, while also outputting a signal indicative that error correction has failed if the data cannot be corrected.

The output of the de-interleave/interpolation circuit 14 is supplied to a D/A (digital-to-analog) conversion circuit 17. The D/A conversion circuit 17 has a de-multiplexer which, for each channel, separates the time division multiplexed digital data containing the audio information of the left and right channels, and reproduces the audio signals of the left and right channels. The reproduced audio signal has unwanted components thereof removed by LPFs (low pass filters) 18L and 18R to become digital audio output. The circuits labeled 9, 13-17, 18L, 18R and 24 form a second reproducing means.

The respective outputs of the LPF 18L and 18R, i.e., the left and right channels, are connected with one of the contacts of the selector switches 19L and 19R and (with a closing of the switches 19L and 19R) can be selectively connected to first input terminals of adders 20L and 20R. A wiper of a variable resistor 21 is connected as a balance adjustment between the respective outputs of the FM demodulating circuits 12L and 12R and is connected to the contacts of the selector switches 22L and 22R and (with a closing of the switches 21L and 21R) can be selectively connected to second input terminals of adders 20L and 20R. The respective output terminals of the FM demodulating circuits 12L and 12R also can be selectively connected directly to the second terminals of adders 20L and 20R via the switches 23L and 23R. The output terminals of the adders 20L and 20R serve as the audio output terminals of the player. The on and off operation of the switches 19L, 19R, 22L, 22R, 23L, and 23R are controlled by the system controller 7.

A subcode outputted from the EFM demodulating circuit 13 is supplied to the system controller 7. The system controller 7 is formed of a microcomputer consisting of, for example, a processor, a ROM, a RAM, and a timer. The system controller 7 performs an arithmetic operation in accordance with the data or programs stored in the ROM and RAM under a command supplied from an operation unit 28 through a key operation, and outputs instructions such as PLAY, SEARCH, JUMP and so on to the playback unit controlling circuit 5.

The reproduced video signal which is outputted from the video demodulating circuit 10, is supplied to a control code detecting circuit 25. The control code detecting circuit 25 detects a control code indicative of a predetermined two-channel monaural recording to generate a detection signal of a high level. The control code represents that the signals of the left and right channels are inserted in the blanking period of the vertical sync signal of the video signal (which is recorded through frequency modulation), the content of the analog audio signal of the left channel is only a monaural accompaniment, and the content of the analog audio signals of the right channel includes the monaural accompaniment and the vocal.

There are further provided a first loading sensor 26 for detecting that the disc is loaded at a predetermined playback position and a second loading sensor 27 for detecting whether the loaded disc is of a predetermined size (for example, a diameter greater than 20 cm). The output signals of the loading sensors 26 and 27 are supplied to the system controller 7. The first loading sensor 26 is mounted to face the disc at a location within a radius of 6 cm with respect to the center of the disc, optically to detect the loading of the disc. The second loading sensor 27 is mounted to face the disc at, for example, a location which is 6-10cm displaced with respect to the center of the disc, optically to detect the loading of the disc.

With such an arrangement, when the disc is loaded at a predetermined playback position, the disc detection signal indicative of the loading of the disc is supplied to the system controller 7 from the first loading sensor 26. Then, the processor in the system controller 7 begins an initial operation of playing back the disc to make a decision based on whether or not the disc is of a predetermined size as shown in Fig. 2 (step 41). If the detection signal is not supplied from the second loading sensor 27, then the disc loaded is regarded as being a CD or CDV, and a CD initialization operation is performed (step 42). If the disc is of a predetermined size, then the disc detection signals are supplied from both the first loading sensor 26 and the second loading sensor 27. When the disc is identified as being of the predetermined size, the disc is regarded as being a video disc and the processor issues an instruction to the playback control circuit 5 for initiating the driving of the carriage motor 4 and the spindle motor 1 (step 43), thereby to make a decision based on whether or not a digital audio signal is recorded (step 44). This is decided depending on whether the sync signal is supplied from the sync signal detection circuit 24. If the sync signal is supplied, it is decided that the disc is a video disc or LDD disc in which the digital audio signal is recorded.

Then a decision is made based on whether or not a TOC (Table of Contents) is provided in the inner periphery of the disc (step 45). A TOC is a subcode representative of the tune data such as the required time for playing back the respective tunes, the beginning of the tunes, and the stereo audio signals. If a TOC is not provided, the disc is regarded as being an ordinary video disc in which only an analog audio signal is recorded as an audio signal, even if the digital audio signal is recorded. If a TOC is provided, TOC data is read (step 46) into an internal memory (not shown) to make a decision based on whether or not the digital audio stereo signal is recorded (step 47).

If the digital stereo audio signal is recorded, a digital stereo flag F_{DS} is reset to 0 (step 49). In the disc in which a monaural digital audio signal is recorded, it is defined that the content of the analog audio signal in the left channel is only the monaural accompaniment and the content of the analog audio signal for the right channel is the monaural accompaniment plus the vocal part.

In the CD initialization operation in step 42, TOC data is read from a TOC in the inner peripheral region of the disc into the internal memory, just as in the LDD disc in which the aforementioned TOC is provided.

If a playback initialization instruction is issued after the completion of the playback initialization operation of Fig. 2, the processor in the system controller 7 begins a further playback operation as set forth in Fig. 3. Initially, in step 51, a decision is made based on whether or not the CD or CDV is loaded. If the loading of the CD or CDV is confirmed, the switches 19L and 19R are closed and the switches 22L, 22R, 23L and 23R are opened (step 52). In this manner, the audio signal of the left and right channels outputted from the LPF's 18L and 18R are outputted as an output of the player through the switches 19L and 19R and the adders 20L and 20R.

If the CD or the CDV is not loaded, then a decision is made based on whether or not the ordinary video disc (which is not provided with a TOC) is loaded (step 53). If the disc is regarded as being an ordinary video disc, then the system controller 7 makes a decision based on whether or not the detection signal is supplied from the control code detection circuit 25 (step 54).

If the detection signal is supplied, then the content of the analog audio signal in the left channel is only the monaural accompaniment and the content of the analog audio signal in the right channel is the monaural accompaniment plus the vocal part; thus the switches 22L and 22R are closed while the switches 19L, 19R, 23L, and 23R are opened (step 55). By this operation, the audio signals in the left and right channels outputted from the demodulating circuits 12L and 12R are mixed by the variable resistor 21. The mixing ratio in mixing the audio signals in the left and right channels depends on the position of the wiper of the variable resistor 21; thus the sound level of the vocal part contained in the right channel together with the monaural accompaniment as the analog audio signal can be adjusted. The audio signal mixed by the variable resistor 21 is outputted as the output of the player via the switches 22L and 22R and the adders 20L and 20R.

If the detection signal is not supplied, the processor regards the audio signals in the left and right channels outputted from the demodulating circuits 12L and 12R as being the stereo audio signals; thus the processor causes the switches 23L and 23R to close while the switches 19L, 19R, 22L and 22R are open (step 56). Through this operation, the audio signals in the left and right channels outputted from the demodulating circuits 12L and 12R are directly outputted as the outputs of the player, through the switches 23L and 23R and subsequently through the adders 20L and 20R.

If the processor decides that a TOC is provided, then it makes a decision based on whether or not a predetermined playback instruction is issued from the operation unit 28 (step 57). The predetermined playback instruction is issued by means of the key operation through the operation unit 28, to obtain the reproduced sound which includes the vocal part together with the stereo accompaniment thereof. If the predetermined playback instruction is issued, a decision is made based on whether or not the digital stereo flag F_{DS} is set to 1 (step 58).

If F_{DS} = 1, a decision is made based on whether or not the detection signal is supplied from the control code detecting circuit 25 (step 59). If the detection signal is supplied, the disc is decided to be an LDD in which the analog audio signal in the left channel (outputted from the demodulating circuit 12L) contains only the monaural accompaniment, and the analog audio signal in the right channel (outputted from the demodulating circuit 12R) contains both the monaural accompaniment and the vocal part, and the switches 19L, 19R, 22L, and 22R are closed and the switches 23L and 23R are opened (step 60). Therefore the stereo audio signals in the left and right channels outputted from the LPF's 18L and 18R are supplied to the adders 20L and 20R through the switches 19L and 19R. On the other hand, the audio signal mixed by the variable resistor 21 are supplied to the adders 20L and 20R through the switches 22L and 22R.

In the adder 20L, the audio signal including the vocal part is added to the audio signal in the left channel of the stereo signals. In the adder 20R, the audio signal including the vocal part is added to the audio signal in the right channel of the stereo signals. The audio signals in the left and right channels thus added by the adders 20L and 20R are outputted as the outputs from the player. Positioning the wiper of the variable resistor 21 to the right channel side can provide the vocal part with the stereo accompaniment.

If the detection signal is not decided as being supplied in step 59, then the playback instruction is ignored and just as in the case of a CD and CDV, the switches 19L and 19R are closed and the switches 22L, 22R, 23L, and 23R are opened (step 52).

If the predetermined playback instruction is not issued in step 57, or if F_{DS} = 0 in step 58, then just as in the case of a detected ordinary video disc, the processor proceeds to the step 54 where the system controller 7 makes a decision based on whether or not the detection signal is supplied from the control code detecting circuit 25. If the detection signal is supplied, then the switches 22L and 22R are closed while the switches 19L, 19R, 23L, and 23R are opened (step 55). If the detection signal is not supplied, then the switches 23L and 23R are closed, while the switches 19L, 19R, 22L, and 22R are opened (step 56).

The system controller 7 issues a control signal to the playback control circuit 5 so as to set the disc driving system to a reproduction mode which corresponds to the type of the disc detected, to drive the disc into rotation as well as to control the reading position of the pickup 3.

In the aforementioned embodiment, the signals outputted from the variable resistor 21 are supplied to the adders 20L and 20R through the switches 22L and 22R, but the embodiment is only exemplary. For example, since only the right channel contains both the monaural accompaniment and the vocal part, the output signal from the demodulating circuit 12R, as shown in Fig. 4, may be supplied to the adders 20L and 20R through the switch 32, and then the switch 32 may be closed together with the switches 19L and 19R in step 63. Alternatively, as shown in Fig. 5, the output signal from the demodulating circuit 12R may be supplied to the adders 20L and 20R through the variable resistors 31L and 31R and the switches 32L and 32R.

As described above, the disc player according to the present invention is provided with a first reproduction means for reproducing the digital stereo audio signal in the signal that is read by means of the pickup from the disc loaded at a playback position, and a second reproduction means for reproducing the analog audio signal in the signal that is read by means of the pickup. When the disc loaded at the playback position is identified as being the LDD disc, the stereo audio signal outputted from the first reproduction means is mixed with the analog audio signal outputted from the second reproduction means, and, thereafter, is outputted. In other words, the audio signal, associated with the accompaniment, is the reproduced digital stereo audio signal to which the audio signal associated with the vocal part is added. Thus, when one wishes to listen to the vocal part by playing back the LDD disc, the accompaniment is reproduced in the stereo mode, resulting in sound as good as a live orchestra.

Particularly, when both channels of the analog audio signals are to be mixed with the digital stereo audio signals through the variable resistor 21, only the vocal part that resides in one of the channels is varied, and thus the reproduction of the audio signal can be performed with the output level of the accompaniment remaining constant. The same effect may be obtained by constructing the variable resistors 31L and 31R in Fig. 5 such that they drivingly operate in a manner complementary to each other.

## Claims

1. A disc player capable of playing back an LDD disc (2) on which digital stereo audio signals and analog audio signals formed of a plurality of channels, are recorded in different frequency bands in a predetermined format, said player comprising:
pickup means (3) for reading signals recorded in a disc which is loaded in a playback position in said player;
first reproduction means (9,24,13-18) for reproducing digital stereo audio signals from signals which are read by means of said pickup means;
second reproduction means (8,11,12) for reproducing at least one channel of analog audio signals from signals which are read by means of said pickup means;
identifying means (24,26,27) for identifying whether or not said disc loaded at the playback position is a LDD disc; characterised by
mixing means (19-23) for mixing and outputting, when the disc loaded at the playback position is identified as being an LDD disc, stereo audio signals reproduced by said first reproduction means with at least one channel of analog audio signals reproduced by said second reproduction means.

2. A disc player as claimed in Claim 1, wherein said mixing means comprises adder means for receiving said digital stereo audio signals and said analog audio signals, and adding said analog audio signals to at least one channel of left and right channels of said digital stereo audio signals.

3. A disc player as claimed in Claim 2, wherein said second reproduction means produces a first analog audio signal channel (L) containing monaural accompaniment and vocal signals and a second analog audio signal channel (R) containing monaural accompaniment signals but not vocal signals, and said first reproduction means produces a left digital audio signal channel and a right digital audio signal channel which both contain monaural accompaniment signals but not vocal signals.

4. A disc player as claimed in Claim 3, wherein said mixing means mixes, when the disc loaded at the playback position is identified as being an LDD disc, said first analog audio signal channel with at least one channel of said left and right digital audio signal channels.

5. A disc player as claimed in Claim 3, further comprising:
balance means (21) for receiving said first and second analog audio signal channels and providing at least one selectable-balance analog audio output with respect thereto, wherein said mixing means mixes, when the disc loaded at the playback position is identified as an LDD disc, said at least one selectable-balance analog audio output with at least one channel of said left and right digital audio signal channels.

6. A method of playing an LDD disc in which digital stereo audio signals and analog audio signals formed of a plurality of channels are recorded in different frequency bands in a predetermined format, said method comprising the steps of:
judging whether or not a disc loaded in a player is a video disc;
judging whether or not a digital audio signal is recorded;
judging whether or not a TOC (Table of Contents) is provided;
identifying a kind of said disc according to the above judgements; characterised by
mixing and outputting, when said disc is identified as being an LDD disc, said digital stereo audio signals with at least one channel of analog audio signals.

## Patentansprüche

1. Plattenspieler, der zum Abspielen einer LDD-Platte geeignet ist, in der digitale Stereo-Audio-Signale und analoge Audiosignale, die in einer Vielzahl von Kanälen ausgebildet sind, in unterschiedlichen Frequenzbändern in einem vorbestimmten Format aufgezeichnet sind, welcher Plattenspieler umfaßt:
Aufnehmermittel (3) zum Auslesen von Signalen, die an einer in einer Abspielposition in dem Plattenspieler eingeladenen Platte aufgezeichnet sind;
erstes Wiedergabemittel (9,24,13-18) zum Wiedergeben digitaler Stereo-Audio-Signale von Signalen, die mittels des Aufnehmers gelesen werden;
zweites Wiedergabemittel (8,11,12) zum Wiedergeben mindestens eines Kanals der analogen Audiosignale von Signalen, die mittels des Aufnehmers gelesen werden;
Identifizierungsmittel (24,26,27), um zu identifizieren, ob die an der Wiedergabeposition geladene Platte eine LDD-Platte ist;
gekennzeichnet durch Mischermittel (19-23) zum Mischen und zum Ausgeben von durch das erste Wiedergabemittel wiedergegebenen Stereo-Audio-Signalen mit mindestens einem Kanal der durch das zweite Wiedergabemittel ausgegebenen analogen Audiosignale, wenn die Platte bei der Wiedergabeposition als eine LDD-Platte identifiziert wurde.

2. Plattenspieler nach Anspruch 1, bei dem das Mischermittel Addiermittel umfaßt, um die digitalen Stereo-Audio-Signale und die analogen Audiosignale aufzunehmen und die analogen Audiosignale zu mindestens einem Kanal von rechten und linken Kanälen der digitalen Stereo-Audio-Signale zu addieren.

3. Plattenspieler nach Anspruch 2, bei dem das zweite Wiedergabemittel einen ersten analogen Audiosignal-Kanal (L) erzeugt, der monaurale Begleitung und Vokalsignale enthält und einen zweiten analogen Audiosignal-Kanal (R), der monaurale Begleitung, aber keine Vokalsignale enthält, und das erste Wiedergabemittel einen linken digitalen Audiosignal-Kanal und einen rechten digitalen Audiosignal-Kanal erzeugt, die beide monaurale Begleitung, aber keine Vokalsignale enthalten.

4. Plattenspieler nach Anspruch 3, bei dem das Mischermittel, wenn die an der Abspielposition geladene Platte als eine LDD-Platte identifiziert wurde, den ersten analogen Audiosignal-Kanal mit mindestens einem Kanal von den linken oder rechten digitalen Audiosignal-Kanälen mischt.

5. Plattenspieler nach Anspruch 3, welcher weiter umfaßt:
Mittenausgleich-Mittel (21) zum Aufnehmen des ersten und des zweiten analogen Audiosignal-Kanals und Schaffen mindestens eines darauf bezogenen wahlweise mittenausgeglichenen analogen Audio-Ausgangsignals, wobei, wenn die an der Abspielposition geladene Platte als eine LDD-Platte identifiziert ist, das Mischermittel das mindestens eine wahlweise mittenausgeglichene Audio-Ausgangsignal mit mindestens einem Kanal von den linken oder rechten digitalen Audiosignal-Kanälen mischt.

6. Verfahren zum Abspielen einer LDD-Platte, in der digitale Stereo-Audio-Signale und analoge Audiosignale, die aus einer Vielzahl von Kanälen ausgebildet sind, in unterschiedlichen Frequenzbändern in einem vorbestimmten Format aufgezeichnet sind, welches Verfahren die Schritte umfaßt:
es wird beurteilt, ob eine in einen Plattenspieler geladene Platte eine Videoplatte ist;
es wird beurteilt, ob ein digitales Audiosignal aufgezeichnet ist;
es wird beurteilt, ob eine TOC (Inhaltverzeichnis-Tabelle) vorgesehen ist;
die Plattenart wird entsprechend den vorstehenden Beurteilungen identifiziert;
dadurch gekennzeichnet, daß,
wenn die Platte als ein LDD-Platte identifiziert wurde, die digitalen Stereo-Audiosignale mit mindestens einem Kanal analoger Audiosignale gemischt und ausgegeben werden.

## Revendications

1. Tourne-disque capable de reproduire un disque LDD (disque optique vidéo avec son numérique) (2) sur lequel des signaux audio numériques stéréo et des signaux audio analogiques formés d'une pluralité de canaux, sont enregistrés dans des bandes de fréquences différentes dans un format prédéterminé, ledit tourne-disque comprenant :
un moyen de lecture (3) pour lire les signaux enregistrés sur un disque qui est chargé dans une position de reproduction dans ledit tourne-disque ;
un premier moyen de reproduction (9, 24, 13 à 18) pour reproduire des signaux audio stéréo numériques à partir des signaux qui sont lus à l'aide dudit moyen de lecture ;
un second moyen de reproduction (8, 11, 12) pour reproduire au moins un canal de signaux audio analogiques à partir des signaux qui sont lus à l'aide dudit moyen de lecture ;
un moyen d'identification (24, 26, 27) pour identifier si ledit disque chargé dans la position de reproduction est, ou non, un disque LDD ; caractérisé par :
un moyen de mélange (19 à 23) pour mélanger et pour sortir, lorsque le disque chargé dans la position de lecture est identifié comme étant un disque LDD, des signaux audio stéréo reproduits par ledit premier moyen de reproduction avec au moins un canal de signaux audio analogiques reproduit par ledit second moyen de reproduction.

2. Tourne-disque selon la revendication 1, dans lequel ledit moyen de mélange comprend un moyen additionneur pour recevoir lesdits signaux audio numériques stéréo, et lesdits signaux audio analogiques, et pour additionner lesdits signaux audio analogiques à au moins un canal des canaux gauche et droit desdits signaux audio numériques stéréo.

3. Tourne-disque selon la revendication 2, dans lequel ledit second moyen de reproduction reproduit un premier canal de signaux audio analogiques (L) contenant des signaux d'accompagnement et vocaux monauraux et un second canal de signaux audio analogiques (R), contenant des signaux d'accompagnement monauraux mais pas de signaux vocaux, et dans lequel ledit premier moyen de reproduction reproduit un canal de signaux numériques gauche et un canal de signaux audio numériques droit qui contiennent tous les deux des signaux d'accompagnement monauraux mais pas de signaux vocaux.

4. Tourne-disque selon la revendication 3, dans lequel ledit moyen de mélange, lorsque le disque chargé dans la position de reproduction est identifié comme étant un disque LDD, mélange ledit premier canal de signaux audio analogiques avec au moins un canal desdits canaux de signaux audio numériques gauche et droit.

5. Tourne-disque selon la revendication 3, comprenant en outre :
un moyen d'équilibrage (21) pour recevoir lesdits premier et second canaux de signaux audio analogiques, et pour délivrer au moins une sortie audio analogique équilibrée pouvant être sélectionnée en fonction de ceux-ci, dans lequel ledit moyen de mélange, lorsque le disque chargé dans la position de reproduction est identifié comme un disque LDD, mélange ladite au moins une sortie audio analogique équilibrée pouvant être sélectionnée avec au moins un canal desdits canaux de signaux audio numériques gauche et droit.

6. Procédé de reproduction d'un disque LDD dans lequel des signaux audio numériques stéréo et des signaux audio analogiques formés d'une pluralité de canaux sont enregistrés dans des bandes de fréquences différentes dans un format prédéterminé, ledit procédé comprenant les étapes de :
détermination du fait qu'un disque chargé dans un tourne-disque est, ou non, un disque vidéo ;
détermination du fait qu'un signal audio numérique, est, ou non, enregistré ;
détermination du fait qu'une TOC (table des matières) est, ou non, prévue ;
identification du type dudit disque en fonction des déterminations ci-dessus ; caractérisé par :
le mélange et la sortie, lorsque ledit disque est identifié comme étant un disque LDD, desdits signaux audio numériques stéréo avec au moins un canal de signaux audio analogiques.
